# EUROPEAN PATENT APPLICATION

(11) **EP 3 495 791 A1**
(43) Date of publication of application: **12.06.2019**
(21) Application number: 18197328.0
(22) Date of filing: 27.09.2018
(51) Int. Cl.: G01K 3/04, G01K 11/12, G01K 1/02

(54) **TEMPERATURE DISPLAY DEVICE AND TEMPERATURE HISTORY MANAGEMENT LABEL**

(30) Priority: 29.09.2017 JP 2017189275
(71) Applicant: Seiko Instruments Inc., Chiba-shi, Chiba 261-8507 (JP)
(72) Inventor: SAMBONGI, Norimitsu, Chiba-shi, Chiba 261-8507 (JP); TANI, Kazuo, Chiba-shi, Chiba 261-8507 (JP); SATO, Yoshinori, Chiba-shi, Chiba 261-8507 (JP); YAMAMOTO, Takashi, Chiba-shi, Chiba 261-8507 (JP)
(74) Representative: Miller Sturt Kenyon

(57) **Abstract**

A temperature display device (20) capable of accurately displaying a temperature history at any elapsed time, includes a base material (31); a time-information-to-be-printed portion (24) formed on the base material (31); and a temperature indicator (23) formed on the base material (31), the temperature indicator (23) including a photochromic layer (33).

## Description

### BACKGROUND OF THE INVENTION

### 1. Field of the Invention

The present invention relates to a temperature display device and a temperature history management label.

### 2. Description of the Related Art

In general, it has been well understood empirically that, regarding food, medicine, and the like, it is required to pay attention to an elapsed time and a storage temperature environment after the production or opening. For example, a dairy product deteriorates rapidly after the production. A user of a product recognizes expiration date information on the product based on information printed or output through a printer by a company that has produced the product.

Further, in many types of medicines, a storage state, for example, a temperature environment, is required to be appropriately managed. For example, vaccine, which is a medicine, is a product derived from a living organism, and an appropriate storage state thereof varies depending on the kind thereof. Medicines do not exhibit effects thereof unless the storage state thereof is appropriately managed.

Products having high thermal susceptibility, such as food and medicine, are expected to increase in the future. Thus, it is more and more important to properly manage each of those products. It is required that whether or not a product having high thermal susceptibility is managed at an appropriate temperature be monitored by a company that produces and sells the product, as well as an individual who uses the product. In particular, it is important to grasp how long the product having high thermal susceptibility has been stored at an inappropriate temperature.

Currently, in a production step, a storage step, a delivery step, and the like of a product, the temperature of the product is managed through use of an electronic measuring instrument installed in a facility for managing the product. When the temperature is managed through use of the electronic measuring instrument, in order to record a temperature history, it is required to connect the electronic measuring instrument to a computer or the like to output the measured temperature history to the computer or the like.

The use of the electronic measuring instrument is not suitable for temperature management for the following reasons. The electronic measuring instrument employs an operation principle in which the electronic measuring instrument is driven by a battery, resulting in high cost. Further, the size of the instrument is increased due to a complicated configuration of the electronic measuring instrument, and hence it is difficult to individually set the electronic measuring instrument in each product. In addition, the manipulation for grasping a temperature history is cumbersome as described above, and hence there is no ease of handling.

As another tool for temperature management, there is given a thermo-label using a thermosensitive ink material. The thermo-label is easy to handle but has no function for starting temperature detection. The coloring reaction of the thermosensitive ink material is reversible, and hence an object to be subjected to temperature detection and a usage situation are limited. Further, it is difficult to perform temperature measurement with high accuracy through use of the thermo-label. Therefore, an indicator, a tag, a label, or the like capable of easily and accurately detecting a storage time and a storage temperature of a product having high thermal susceptibility and displaying the detected storage time and storage temperature are required.

As such an indicator, there has been known, for example, a temperature history display material using a photochromic compound. The temperature history display material enables a temperature history at a predetermined elapsed time to be confirmed. However, when the storage state of a product or the like is actually monitored, it is desired that the temperature history of the product or the like at any elapsed time be confirmed.

Thus, in the fields of this type, there has been a demand for a temperature display device and a temperature history management label capable of accurately displaying a temperature history at any elapsed time through use of the temperature history display material described above.

### SUMMARY OF THE INVENTION

According to one embodiment of the present invention, there is provided a temperature display device, including: a base material; a time-information-to-be-printed portion formed on the base material; and a temperature indicator formed on the base material, the temperature indicator including a photochromic layer.

In the above-mentioned temperature display device according to the one embodiment of the present invention, wherein the time-information-to-be-printed portion includes a thermal recording layer.

In the above-mentioned temperature display device according to the one embodiment of the present invention, wherein the photochromic layer is positioned on the thermal recording layer.

In the above-mentioned temperature display device according to the one embodiment of the present invention, wherein the photochromic layer is positioned on the thermal recording layer and partially penetrates a part of the thermal recording layer.

The above-mentioned temperature display device according to the one embodiment of the present invention, further including a blocking layer formed between the thermal recording layer and the photochromic layer.

In the above-mentioned temperature display device according to the one embodiment of the present invention, wherein the photochromic layer has an area smaller than an area of the thermal recording layer.

The above-mentioned temperature display device according to the one embodiment of the present invention, further including a protective layer formed on the photochromic layer.

In the above-mentioned temperature display device according to the one embodiment of the present invention, wherein the protective layer has an area larger than an area of the photochromic layer.

The above-mentioned temperature display device according to the one embodiment of the present invention, further including a pressure-sensitive adhesive layer on a surface of the base material opposite to a surface on which the temperature indicator is formed.

In the above-mentioned temperature display device according to the one embodiment of the present invention, wherein

According to one embodiment of the present invention, there is provided a temperature history management label, including: the temperature indicator of the temperature display device, which is initialized by being irradiated with light; and the time-information-to-be-printed portion, on which an initialization time at which the temperature indicator is initialized is printed.

In the above-mentioned temperature history management label according to the one embodiment of the present invention, wherein a part of the time-information-to-be- printed portion in which the initialization time is printed is separated from the temperature indicator by at least 1 mm.

In the above-mentioned temperature history management label according to the one embodiment of the present invention, wherein the temperature history management label has information different from the initialization time printed thereon.

In the above-mentioned temperature history management label according to the one embodiment of the present invention, wherein the time-information-to-be-printed portion has the initialization time printed thereon by a thermal printer.

### BRIEF DESCRIPTION OF THE DRAWINGS

Embodiments of the present invention will now be described by way of further example only and with reference to the accompanying drawings, in which:
FIG. 1 is a plan view of a temperature display device according to one embodiment of the present invention.
FIG. 2 is a sectional view of the temperature display device according to one embodiment of the present invention.
FIG. 3 is a graph for showing one example of fading characteristics of a temperature indicator in one embodiment of the present invention.
FIG. 4 is a sectional view of the temperature display device according to one embodiment of the present invention.
FIG. 5 is a sectional view of the temperature display device according to one embodiment of the present invention.
FIG. 6 is a sectional view of the temperature display device according to one embodiment of the present invention.
FIG. 7 is a sectional view of the temperature display device according to one embodiment of the present invention.
FIG. 8 is a sectional view of the temperature display device according to one embodiment of the present invention.
FIG. 9 is a sectional view of the temperature display device according to one embodiment of the present invention.
FIG. 10 is a plan view of the temperature display device according to one embodiment of the present invention.
FIG. 11A is a plan view of the temperature display device according to one embodiment of the present invention.
FIG. 11B is a table for showing patterns of temperature indicators 23a to 23c after an elapse of 180 minutes from initialization of the temperature display device according to one embodiment of the present invention, and results obtained by determining whether temperature management is appropriate.
FIG. 12 is a schematic view for illustrating an issuing apparatus for the temperature display device according to one embodiment of the present invention.

### DESCRIPTION OF THE EMBODIMENTS

Now, a temperature display device (temperature history management label) of the present invention is specifically described with reference to the drawings. An embodiment of the present invention is described below in order to specifically describe the present invention so that the spirit thereof is well understood. Unless otherwise stated, the embodiment does not limit the details of the present invention. The number, position, dimension, and the like can be modified, omitted, or added, and other modifications can be performed without departing from the scope of the present invention.

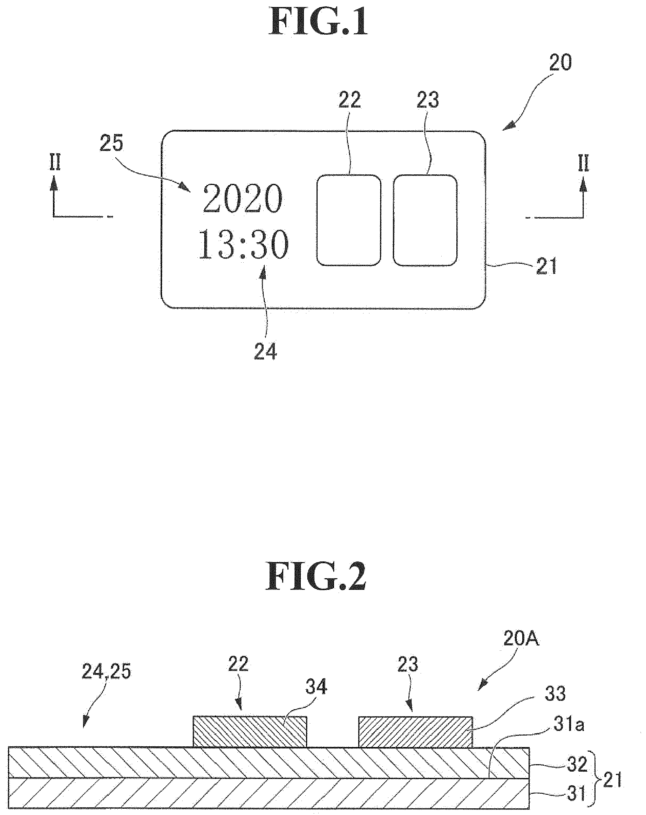

Now, a temperature display device (temperature history management label) 20 according to one embodiment of the present invention is described with reference to FIG. 1 and FIG. 2. Specifically, description is given of a mode of the temperature display device 20 in which printing can be performed through use of a thermal printer. However, the present invention is not limited thereto, and the temperature display device 20 may have a configuration in which printing is performed through use of a printing apparatus other than a thermal printer, for example, an inkjet printer. FIG. 1 is a plan view of the temperature display device 20 according to one embodiment of the present invention. FIG. 2 is a sectional view of the temperature display device 20 taken along the line II-II of FIG. 1.

As illustrated in FIG. 1 and FIG. 2, the temperature display device 20 according this embodiment includes a mount 21, a reference portion 22, a temperature indicator 23, a time-information-to-be-printed portion 24, and an information printing portion 25. In plan view, the reference portion 22, the temperature indicator 23, the time-information-to-be-printed portion 24, and the information printing portion 25 are arranged in a plane direction of the mount 21. The mount 21 includes a base material 31 and a thermal recording layer 32. The thermal recording layer 32 is positioned on a first surface 31a of the base material 31. A photochromic layer 33 and a colored layer 34 in this embodiment are positioned on the thermal recording layer 32.

It is assumed that the temperature display device 20 is used by being bonded to an object to be subjected to temperature detection, for example, a product, and hence the shape and dimension of the mount 21 are selected based on the specification, size, and usage method of the object to be subjected to temperature detection.

As a material for the base material 31, there are given glass, plastic, synthetic paper, high-quality paper, metal (for example, aluminum), and the like. It is preferred that the base material 31 be synthetic paper or high-quality paper. When the temperature display device 20 is used at a low temperature, and there is risk of dew condensation, it is preferred that synthetic paper be used as the base material 31. When synthetic paper is used as the base material 31, water is less liable to permeate the base material 31, and thus the strength of the base material is kept.

The base material 31 may have a plate shape, a foil shape, or the like. It is preferred that the base material 31 have flexibility. The base material 31 may be transmissive or non-transmissive to light (for example, an ultraviolet ray) radiated to the temperature indicator 23. The base material 31 has, for example, a card shape that is substantially rectangular in plan view.

There is no particular limitation on the thickness of the base material 31 as long as the base material 31 can support the thermal recording layer 32 and the photochromic layer 33. The thickness is preferably from 10 µm to 1.0 mm, desirably from 50 µm to 0.5 mm as a more practical range.

The material for the base material 31 may be selected in consideration of methods of forming the thermal recording layer 32 and the photochromic layer 33 and arrangement patterns of the thermal recording layer 32, the photochromic layer 33, and the like.

The thermal recording layer 32 is positioned on the base material 31. The thermal recording layer 32 is discolored by being partially heated through use of a thermal printer or the like and is subjected to printing.

The thickness of the thermal recording layer 32 is preferably from 0.1 µm to 50 µm, desirably from 0.1 µm to 10 µm as a more practical range. When the thickness of the thermal recording layer 32 is from 0.1 µm to 50 µm, printing quality is improved.

The reference portion 22 exhibits a reference color serving as an index for identifying the color of the temperature indicator 23. When the temperature indicator 23 is visually compared to the reference portion 22, the color of the temperature indicator 23 can be determined. The reference portion 22 includes the colored layer 34.

The colored layer 34 in this embodiment is positioned on the thermal recording layer 32. The colored layer 34 exhibits a reference color serving as an index for identifying the color of the temperature indicator 23. There is no particular limitation on the configuration of the colored layer 34, but it is preferred that the colored layer 34 contain a material (for example, a pigment) which can maintain a desired chroma (color density or lightness) without being discolored due to the effect of an external environment (temperature, light, and the like) and which is excellent in water resistance and light fastness.

The temperature indicator 23 is initialized by irradiation with light having a particular wavelength and changed in chroma (color density, lightness). The temperature indicator 23 includes at least the photochromic layer 33. The photochromic layer 33 in this embodiment is positioned on the thermal recording layer 32.

The photochromic layer 33 contains a photochromic compound being a material that is irreversibly discolored (colored) by irradiation with light having a particular wavelength and is irreversibly faded (decolored) with heat. Thus, when the temperature indicator 23 is discolored by irradiation with light having a particular wavelength, the temperature indicator 23 can be initialized.

That is, when the temperature indicator 23 is irradiated with light immediately before the temperature display device 20 is actually used, the temperature display device 20 is initialized. Thus, there is less limitation on the temperature environment in which the temperature display device 20 is stored, that is, the temperature environment before the temperature display device 20 is initialized. For example, even the temperature display device 20 configured to perform temperature detection at a low temperature of about 2°C can be stored at a normal temperature (for example, 25°C).

The photochromic layer 33 contains at least a photochromic compound. The photochromic compound is a compound that is shifted from a ground state (colorless state) having low energy to an excited state by irradiation with light, for example, an ultraviolet ray, and is irreversibly changed to a stable isomer (colored state). Further, the colored isomer has irreversibility of being faded with thermal energy. This fading reaction semi-permanently continues under certain thermal energy. That is, the fading characteristics of the photochromic compound depend on the temperature environment and the elapsed time from the change to the isomer. Thus, the temperature environment to which the temperature display device 20 (and the object having the temperature display device 20 bonded thereto) have been exposed can be estimated by irradiating the photochromic compound with light to change the photochromic compound to the colored isomer, to thereby initialize the temperature display device 20, and referring to any elapsed time from initialization and the color exhibited by the photochromic compound.

As the photochromic compound, there are given, for example, a diarylethene-based photochromic compound, an azobenzene-based photochromic compound, a spiropyran-based photochromic compound, and a fulgide-based photochromic compound. Of those, the diarylethene-based photochromic compound is preferred from the viewpoint of thermal stability, repetition durability, high sensitivity to heat, capability of a photoreaction at various temperatures, and the like. As the diarylethene-based photochromic compound, there is, for example, a compound represented by a general formula (1).

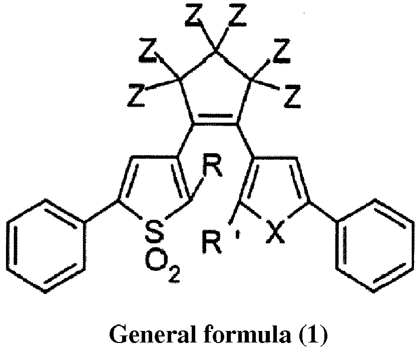

In the general formula (1), X represents a sulfur atom (S) or a sulfonyl group (SO₂); Z represents a hydrogen atom (H) or a fluorine atom (F); and R and R' represent alkyl groups having 1 to 6 carbon atoms or cycloalkyl groups having 3 to 7 carbon atoms, which may be the same or different from each other, at least one of R and R' being a secondary alkyl group having 3 to 7 carbon atoms.

As described above, the photochromic compound is colored by irradiation with light having a particular wavelength, for example, an ultraviolet ray (having a wavelength of, for example, from 250 nm to 400 nm). When the photochromic compound represented by the general formula (1) is irradiated with an ultraviolet ray, two substituents R (in this case, R'=R) bonded to two thiophene rings are bonded to each other to form a ring (ring-closing), and thus the photochromic compound is colored. The colored photochromic compound is stable at a temperature of less than a predetermined temperature but is decolored (faded) by being exposed (heated) to a condition equal to or more than that temperature.

From the viewpoint of enhancing reliability of temperature detection, it is preferred that the photochromic compound be stable under visible light in a colored state.

The ratio of the photochromic compound contained in the photochromic layer 33 is preferably from 0.1 mass% to 20 mass%, desirably from 1.0 mass% to 10 mass% as a more practical range, with respect to the entire mass of the photochromic layer 33. When the ratio of the photochromic compound is 0.1 mass% or less, the initialization density is reduced, and recognition is degraded, with the result that temperature detection accuracy is decreased. When the ratio of the photochromic compound is 20 mass% or more, at a time of initialization by irradiation with light, the reaction rate of the photochromic compound is decreased, and a portion that is not initialized is generated, with the result that temperature characteristics are degraded.

The photochromic layer 33 may contain a binder in addition to the photochromic compound. Examples of the material of the binder include a vinyl chloride resin, a vinyl chloride-vinyl acetate copolymer, an acrylic resin, a polyurethane resin, polyester, an epoxy resin, nitrocellulose (soluble nitrocellulose), ethyl cellulose, polyamide, a cyclized rubber, for example, isoprene rubber, chlorinated polyolefin, a maleic acid resin, a phenol resin, a ketone resin, a xylene resin, a petroleum resin, a melamine resin, an urea resin, and polyisocyanate. The material may be a photocurable resin, for example, a UV curable resin. Of those materials, an acrylic resin is preferred as the binder.

The thickness of the photochromic layer 33 is preferably from 2 nm to 50 µm, desirably from 10 nm to 30 µm as a more practical range. When the thickness of the photochromic layer 33 is 50 µm or more, at a time of initialization by irradiation with light, the reaction rate of the photochromic compound is decreased because the light does not sufficiently reach a portion of the photochromic layer 33 close to the mount 21, and a portion that is not initialized is generated, with the result that temperature characteristics are degraded. When the thickness of the photochromic layer 33 is 2 nm or less, initialization density is reduced, and recognition is degraded, with the result that temperature detection accuracy is decreased.

The time-information-to-be-printed portion 24 is a region in which a time at which the temperature indicator 23 has been initialized and the like are to be printed. The time-information-to-be-printed portion 24 in this embodiment includes the thermal recording layer 32.

In the temperature display device 20 of FIG. 1, the temperature history management label, in which a time is printed on the time-information-to-be-printed portion 24, is illustrated for the purpose of better understanding of the present invention. However, before the temperature indicator 23 is initialized, a time is not printed, and the time-information-to-be-printed portion 24 is a blank. Besides a time, a year, a month, and a day may be printed on the time-information-to-be-printed portion 24.

In addition to the time-information-to-be-printed portion 24, the information printing portion 25 being a region to be printed with information on an object to which the temperature display device 20 is to be bonded and the like may be provided. For example, a product name of the object to which the temperature display device 20 is to be bonded, an identification code for individually identifying the object, and the like can be printed on the information printing portion 25. The information may be printed on the information printing portion 25 before the temperature display device 20 is initialized or at a time at which the temperature indicator 23 is initialized. The information printing portion 25 in this embodiment includes the thermal recording layer 32 in the same manner as in the time-information-to-be-printed portion 24.

The information may be printed on the time-information-to-be-printed portion 24 and the information printing portion 25 under a state of being encrypted with a two-dimensional barcode or the like, instead of being printed as characters. With this, falsification, for example, bonding the temperature display device 20 to another product, can be prevented, with the result that reliability of temperature history displayed by the temperature display device 20 is improved.

The time-information-to-be-printed portion 24 and the information printing portion 25 represent the entire range in which printing can be performed with a thermal printer. Thus, in the time-information-to-be-printed portion 24 and the information printing portion 25, there may be portions in which printing is not performed depending on characters and patterns to be actually printed.

A time at which the temperature indicator 23 has been initialized is printed through use of a thermal printer on the time-information-to-be-printed portion 24 and the information printing portion 25. When printing is performed through use of the thermal printer, the time-information-to-be-printed portion 24 and the information printing portion 25 are heated by the thermal printer. In this embodiment, the colored layer 34 is arranged between the temperature indicator 23 and the time-information-to-be-printed portion 24 in the plane direction of the mount 21. With such arrangement, when printing is performed in the time-information-to-be-printed portion 24, the temperature indicator 23 is less liable to be affected by heat. However, the present invention is not limited thereto, and the temperature indicator 23 and the time-information-to-be-printed portion 24 may be adjacent to each other. In this case, the distance between the temperature indicator 23 and the time-information-to-be-printed portion 24 and the information printing portion 25 is set to preferably 1 mm or more, more preferably 3 mm or more, still more preferably 5 mm or more. In this case, the distance between the temperature indicator 23 and the time-information-to-be-printed portion 24 is defined as a distance of a region in which an end portion of the temperature indicator 23 and a portion of the time-information-to-be-printed portion 24 in which printing is actually performed are closest to each other. When the distance between the temperature indicator 23 and the time-information-to-be-printed portion 24 and the information printing portion 25 is 1 mm or more, even in the case where printing is performed through use of the thermal printer, the temperature indicator 23 can be prevented from being heated. When the distance between the temperature indicator 23 and the time-information-to-be-printed portion 24 and the information printing portion 25 is 3 mm or more, even in a case where an error occurs in a printing position of the thermal printer, the temperature indicator 23 can be prevented from being heated.

One example of a method of manufacturing the temperature display device 20 in one mode of the present invention is described below.

The thermal recording layer 32 is formed on the base material 31. Specifically, a solution containing a leuco dye, a developer, and a solvent is applied to the base material 31 and dried to remove the solvent, to thereby form the thermal recording layer 32. Commercially available heat-sensitive paper may be used as the base material 31 and the thermal recording layer 32 without forming the thermal recording layer 32.

The colored layer 34 is formed on the thermal recording layer 32. As a method of forming the colored layer 34, there is given a method involving preparing a solution containing a pigment and a solvent that enable a desired chroma to be achieved, printing the solution onto a part of the thermal recording layer 32, and drying the solution.

The photochromic layer 33 is formed on the thermal recording layer 32. As a method of forming the photochromic layer 33, there is given a method involving preparing a solution containing a photochromic compound, a binder, and a solvent, printing the solution onto a part of the thermal recording layer 32, and drying the solution.

The solvent to be used in the formation of the photochromic layer 33 is determined depending on the material of the photochromic layer 33 or the thermal recording layer 32, and is, for example, mineral spirit, petroleum naphtha, turpentine, n-butyl, toluene, xylene, cyclohexane, tetralin, acetic acid, methoxybutyl acetate, acetone, methyl isobutyl ketone (MIBK), isophorone, diacetone alcohol, isopropyl alcohol (IPA), n-butanol, ethylene glycol monomethyl ether (methyl cellosolve), 2-ethoxyethanol (ethyl cellosolve), ethylene glycol monobutyl ether (butyl cellosolve), ethylene glycol monoethyl ether acetate (cellosolve acetate), ethylene glycol monobutyl ether acetate (butyl cellosolve acetate), or diethylene glycol monobutyl ether (butyl carbitol). Two or more kinds of those materials may be mixed and used as the solvent. Of those, toluene and acetone are preferred as the solvent.

The ratio of the photochromic compound contained in the solution containing the photochromic compound, the binder, and the solvent is appropriately set so that the solution has appropriate viscosity, the solution is less liable to blur during printing, and the photochromic compound can be uniformly dispersed in the solution.

The viscosity of the solution containing the photochromic compound, the binder, and the solvent may be adjusted so that the photochromic layer 33 does not penetrate the thermal recording layer 32. When the viscosity is adjusted as described above, the photochromic layer 33 can be stably formed, and a temperature detection recognition level and temperature detection accuracy can be improved.

As a printing method, there are given, for example, screen printing, relief printing, flexographic printing, dry offset printing, gravure printing, gravure offset printing, pad printing, and offset printing. Of those methods, screen printing is preferred because of low cost and simplicity. In the manner described above, the temperature display device 20 according to this embodiment is manufactured.

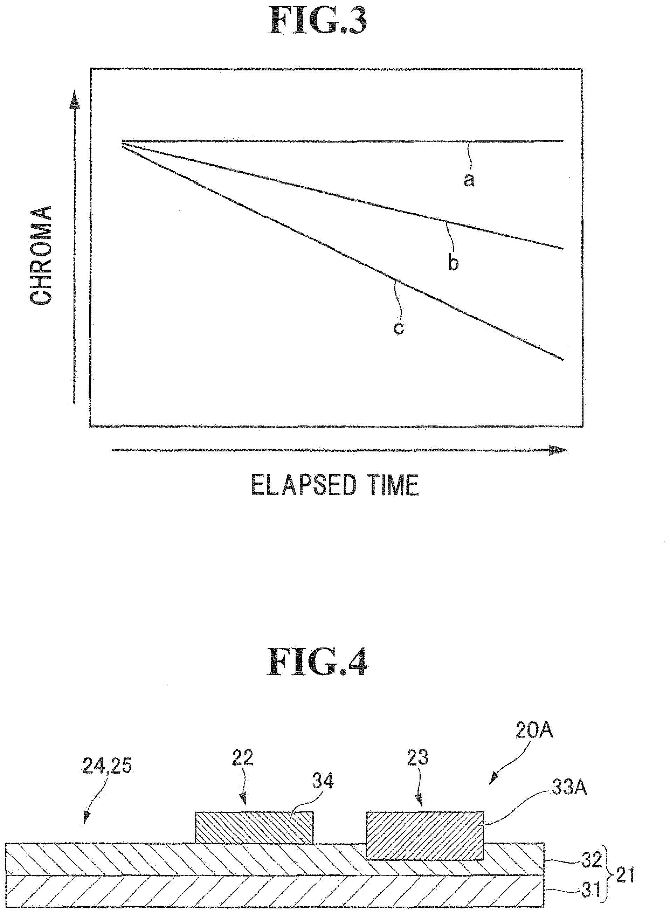

Next, description is given of a method of using the temperature display device 20. FIG. 3 is a graph for showing one example of fading characteristics of the temperature indicator 23. The vertical axis of FIG. 3 represents a chroma (for example, lightness) of the temperature indicator 23, and color becomes thicker (deeper) as a chroma increases. The horizontal axis represents an elapsed time from initialization of the temperature indicator 23.

As shown in FIG. 3, the temperature indicator 23 is colored by irradiation with light having a particular wavelength and then faded (decolored) with the passage of time. In FIG. 3, a symbol "a" represents a time-dependent change of color at a first temperature. A symbol "b" represents a time-dependent change of color at a second temperature higher than the first temperature. A symbol "c" represents a time-dependent change of color at a third temperature higher than the second temperature. Thus, the temperature indicator 23 is faded (decolored) more rapidly as the temperature increases.

The chroma in the reference portion 22 can be determined based on a chroma at a predetermined elapsed time by measuring a change in chroma from a time at which the photochromic compound contained in the temperature indicator 23 is colored (that is, initialized) in advance under a predetermined temperature condition. For example, the chroma in the reference portion 22 is defined as a chroma obtained after an elapse of a predetermined time period from initialization of the temperature display device 20 in an assumed temperature environment. In this case, the chroma in the reference portion 22 is defined as a chroma obtained at a time at which the temperature display device 20 is held at a temperature of 5°C or less for 3 hours after the initialization.

Next, description is given of a method of performing temperature detection of the object through use of the temperature display device 20. First, the temperature indicator 23 of the temperature display device 20 is initialized through use of an issuing apparatus, for example, a thermal printer, and an initialization time is printed on the time-information-to-be-printed portion 24. In this embodiment, the temperature display device 20 under a state in which the temperature indicator 23 is initialized and the initialization time and the like are printed on the time-information-to-be-printed portion 24 is defined as the temperature history management label.

The temperature display device 20 is provided in the issuing apparatus in advance. The temperature indicator 23 of the temperature display device 20 provided in the issuing apparatus is irradiated with light from a light source provided in the issuing apparatus, and thus the temperature indicator 23 is initialized. A time at which the temperature indicator 23 has been initialized and the like are printed on the time-information-to-be-printed portion 24 by a printing recording unit of the issuing apparatus. Information, for example, a time, may be printed on the time-information-to-be-printed portion 24 under a state of being encrypted. When the temperature indicator 23 is initialized, and the initialization time is printed on the time-information-to-be-printed portion 24, the temperature history management label is generated. The temperature history management label is delivered from the issuing apparatus and immediately bonded to a product to be subjected to temperature detection.

After three hours from initialization of the temperature indicator 23, the chroma of the reference portion 22 is visually compared to that of the temperature indicator 23. When it is determined that the chroma of the temperature indicator 23 is higher than that of the reference portion 22, it is estimated that the object has been kept at a temperature of less than 5°C. When it is determined that the chroma of the temperature indicator 23 is the same as that of the reference portion 22, it is estimated that the object has been kept at a temperature of about 5°C. When the chroma of the temperature indicator 23 is lower than that of the reference portion 22, it is estimated that the object has been kept at a temperature of more than 5°C.

As described above, when the chroma of the reference portion 22 is visually compared to that of the temperature indicator 23 after an elapse of a predetermined time period from initialization of the temperature display device 20, it can be estimated whether or not the object having the temperature history management label bonded thereto has been in a temperature environment as assumed. The temperature display device 20 according to this embodiment is effective when the temperature management time of the object is set in advance.

The temperature display device 20 having the above-mentioned configuration includes the thermal recording layer 32, and hence a time and another information can be printed on the temperature display device 20 through use of an issuing apparatus, for example, a thermal printer. The thermal printer is small and lightweight and has high printing reliability with low cost. Therefore, when temperature detection of the object is started through use of the temperature display device 20, the thermal printer can be carried to a storage place of the object. Further, information to be printed can be corrected on demand and printed on the temperature display device 20.

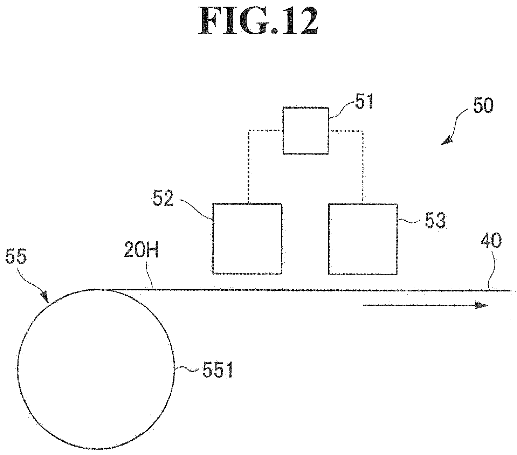

As the issuing apparatus for the temperature history management label, for example, an issuing apparatus 50 of FIG. 12 can be used. The issuing apparatus 50 includes a base material feeder 55, a printing recording unit 52, an irradiation unit 53, a moving mechanism (not shown), and a controller 51.

The base material feeder 55 can include, for example, a roll 551 (for example, a roll sheet), around which a long temperature display device 20H is wound. The temperature display device 20H is in a state before the temperature display device 20 is cut and includes a plurality of temperature display devices 20 connected to each other.

The base material feeder 55 may instead employ a system capable of supplying the temperature display device 20 cut to a predetermined dimension in advance (sheet-feeding system).

The printing recording unit 52 employs a thermal printing recording system using a thermal head. A thermal printer has features of having an extremely small operation noise, a relatively simple structure suitable for miniaturization and reduction of weight, and entailing a low cost. Further, the thermal printer does not use inks such as an ink ribbon and an ink cartridge, and hence the only article of consumption is heat-sensitive paper. Thus, the thermal printer also has an advantage in that running cost can be suppressed with a simple structure. However, the issuing apparatus that can be used in the present invention is not limited thereto, and may employ an ink ribbon printing recording system, an inkjet printing recording system, an electrophotographic printing recording system, a laser marking printing recording system (system involving performing surface processing by irradiating a surface with laser light), or the like.

The printing recording unit 52 is configured to print display information such as information on a time and an object to which the temperature history management label 40 is to be bonded, for example, on the time-information-to-be-printed portion 24 in the temperature display device 20 of the temperature display device 20H.

The irradiation unit 53 includes a light source of irradiation light to be radiated to the temperature indicator 23. The wavelength of the irradiation light from the irradiation unit 53 is, for example, in an ultraviolet range (for example, from 250 nm to 400 nm). An ultraviolet ray enables the temperature indicator 23 to be colored within a wide range from a short wavelength to a long wavelength close to a visible light range. It is desired that the irradiation unit 53 have a configuration capable of selecting a wavelength of irradiation light to be used based on absorption spectra of a ring-opening product and a ring-closing product of a photochromic compound.

As the light source, there are given an LED-type light source and a lamp-type light source. The light source can be selected in accordance with the specification of the temperature display device 20 and the specification of the issuing apparatus 50. In the small issuing apparatus 50, it is suitable that an ultraviolet LED be used as the light source. An ultraviolet LED has a narrow wavelength band, and hence it is preferred that a wavelength be selected from photochromic absorption spectra in a temperature indicator portion of the temperature display device 20 and an ultraviolet LED capable of emitting light having the selected wavelength be selected. When a light source having a wide wavelength band, for example, a lamp-type light source, is used, coloring characteristics of irradiation light can also be adjusted with a filter in accordance with the absorption spectra of the temperature indicator portion.

It is preferred that the irradiation unit 53 be prevented from causing irradiation light from leaking outside of the issuing apparatus 50 at a time of irradiation of light. The irradiation unit 53 may be provided at a position which is on a downstream side from the printing recording unit 52 (downstream side in a conveyance direction of the temperature display device 20H) and which is close to an outlet of the issuing apparatus 50 (delivery port through which the temperature display device 20H is to be delivered). The reason for this is as described below. The temperature indicator portion of the temperature display device 20H starts temperature detection through light irradiation, and hence the temperature display device 20 can be bonded to a target product within a short time period from start of the temperature detection when the irradiation unit 53 is positioned close to the outlet of the issuing apparatus 50. Further, the printing recording unit 52 is positioned on an upstream side in the conveyance direction from the irradiation unit 53, and hence the temperature detection is not started at a time of printing. Therefore, heating at a time of printing does not affect the temperature history of the temperature indicator 23. Thus, accurate temperature history can be displayed.

In this case, the distance between the temperature indicator 23 and the time-information-to-be-printed portion 24 and the information printing portion 25 in the temperature display device 20H depends on the distance between the irradiation unit 53 and the printing recording unit 52 and the conveyance speed of the temperature display device 20. In order to suppress the effect of heat at a time of printing on the temperature indicator 23, the distance between the irradiation unit 53 and the printing recording unit 52, and the conveyance speed of the temperature display device 20 are set so that the distance between the temperature indicator 23 and the time-information-to-be-printed portion 24 and the information printing portion 25 is 1 mm or more, preferably 3 mm or more, more preferably 5 mm or more.

The irradiation unit 53 may be arranged in parallel to the printing recording unit 52 so as to be perpendicular to the conveyance direction of the temperature display device 20H. Through arrangement of the irradiation unit 53 and the printing recording unit 52 as described above, printing can be performed on the time-information-to-be-printed portion 24 simultaneously with light irradiation to the temperature indicator 23. Thus, data reliability of the temperature display device 20 is improved. Further, as compared to the case in which the irradiation unit 53 is provided on the downstream side from the printing recording unit 52, the distance between the temperature indicator 23 and the time-information-to-be-printed portion 24 and the information printing portion 25 in the temperature display device 20H can be easily controlled. Also in this case, the distance between the irradiation unit 53 and the printing recording unit 52 is set so that the distance between the temperature indicator 23 and the time-information-to-be-printed portion 24 and the information printing portion 25 is 1 mm or more, preferably 3 mm or more, more preferably 5 mm or more.

The moving mechanism is configured to feed the long temperature display device 20H from the roll 551 through use of a driver (not shown), for example, a motor, and send out the temperature display device 20 through the printing recording unit 52 and the irradiation unit 53. With this, the temperature display device 20 is issued.

The controller 51 includes, for example, a central processing unit (CPU), a read only memory (ROM), and a random access memory (RAM) connected to each other. For example, the controller 51 is configured to execute a program stored in advance with the CPU.

Further, the controller 51 includes an irradiation controller, a printing controller, an information acquiring unit, a time keeper, and a position controller.

The irradiation controller is configured to control irradiation of light to the temperature display device 20H by the irradiation unit 53. The printing controller is configured to control printing of display information on the temperature display device 20H by the printing recording unit 52. The display information includes, for example, information on a time corresponding to a start time of the temperature detection of the temperature display device 20H, that is, information on a time at which the temperature display device 20H has been initialized through irradiation of light to the temperature indicator 23, and commercial product information.

The information acquiring unit is configured to acquire time information and merchandise information. The time keeper is configured to count an irradiation time for irradiation of light to the temperature indicator 23 by the irradiation unit 53 and output the time information (irradiation time). With this configuration, an accurate time can be printed on the temperature display device 20H.

The position controller is configured to, for example, control conveyance of the temperature display device 20H supplied from the base material supply unit 55. The position controller is configured to output a control signal to the irradiation controller and the printing controller in conformity with the position of the temperature display device 20H to operate the printing recording unit 52 and the irradiation unit 53.

Through use of the issuing apparatus 50 having the above-mentioned configuration, both initialization of the temperature display device of the present invention and printing of an initialization time and the like can be performed.

As other modes of the temperature display device 20, the following modes are given. FIG. 4 is a sectional view of a temperature display device 20A in another mode. As illustrated in FIG. 4, a photochromic layer 33A may partially penetrate a part of the thermal recording layer 32.

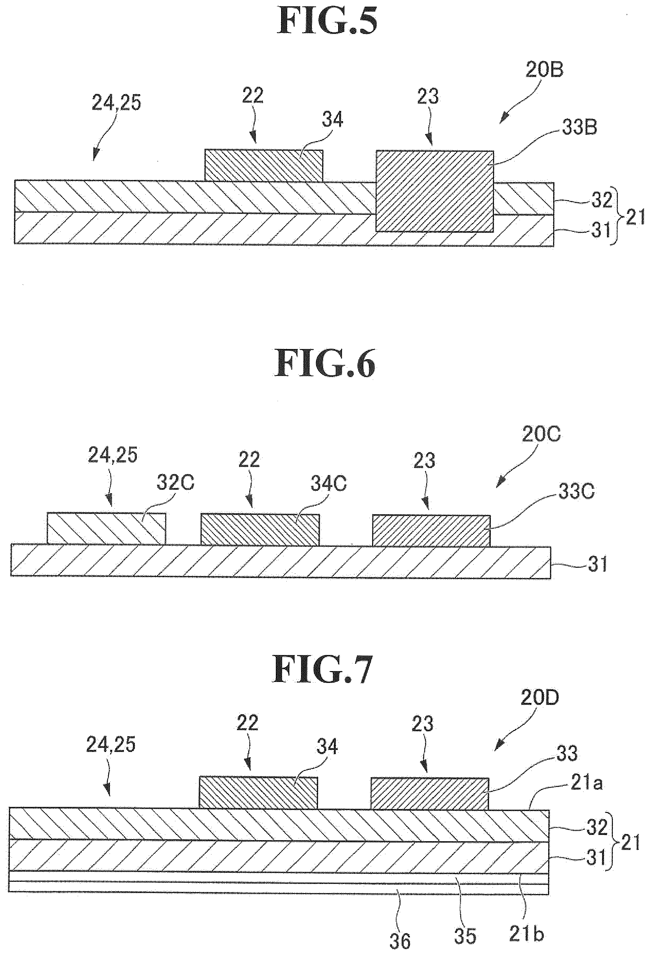

As in a temperature display device 20B illustrated in FIG. 5, a photochromic layer 33B may partially penetrate a part of the thermal recording layer 32 and a part of the base material 31.

The degree to which each of the photochromic layers 33A and 33B of the temperature display devices 20A and 20B penetrates a part of the thermal recording layer 32 and a part of the base material 31 depends on methods of forming the photochromic layers 33A and 33B. Therefore, in order to obtain a photochromic layer with a desired form, it is only required that the methods of forming the photochromic layers 33A and 33B be appropriately selected. For example, in order to control the position of the photochromic layer 33, the viscosity of a solution containing a photochromic compound, a binder, and a solvent may be defined.

In a temperature display device 20C of FIG. 6, a photochromic layer 33C and a colored layer 34C are positioned so as to be brought into direct contact with the base material 31 and positioned in parallel to a thermal recording layer 32C. In this case, the photochromic layer 33C may partially penetrate a part of the base material 31.

A temperature display device 20D of FIG. 7 includes a pressure-sensitive adhesive layer 35 and a peeling layer 36. The pressure-sensitive adhesive layer 35 is positioned on a second surface 21b, which is a surface opposite to a first surface 21a of the base material 31, on which the thermal recoding layer 32 is positioned. The pressure-sensitive adhesive layer 35 is positioned between the base material 31 and the peeling layer 36. The peeling layer 36 is peeled from the pressure-sensitive adhesive layer 35 immediately before the temperature display device 20 is used, and the temperature display device 20 can be used by being bonded to an object.

There is no particular limitation on a material for the pressure-sensitive adhesive layer 35 as long as the temperature display device 20D can be bonded to an object to be subjected to temperature detection. There is no particular limitation on a material for the peeling layer 36 as long as the peeling layer 36 can be easily peeled from the pressure-sensitive layer 35. The pressure sensitive adhesive layer 35 can also be used in all the other modes.

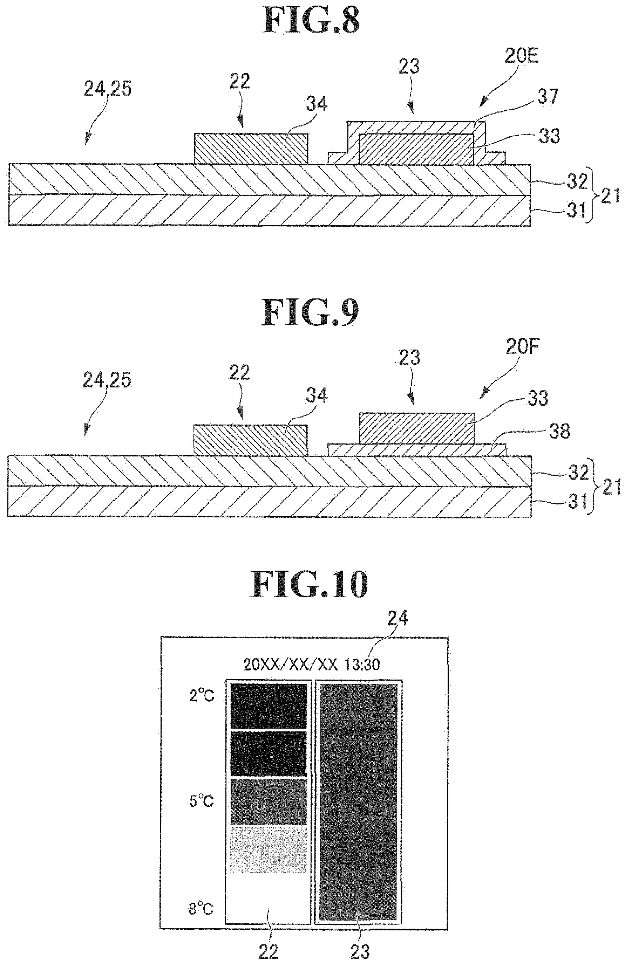

A temperature display device 20E of FIG. 8 includes a protective layer 37 on the photochromic layer 33. The protective layer 37 has an area larger than that of the photochromic layer 33. It is preferred that the protective layer 37 be formed so as to cover the entire photochromic layer 33. Through formation of the protective layer 37, effects of a temperature, humidity, chemicals, and the like on the photochromic layer 33 can be suppressed. Further, the protective layer 37 is configured to prevent the photochromic layer 33 from being heated at a time of printing on the thermal recording layer 32. Through formation of the protective layer 37 on the temperature display device 20E, the effect of heat on the photochromic layer 33 can be suppressed even when the printing position accuracy of a printing apparatus to be used for printing, for example, a thermal printer, is low. The protective layer 37 may be formed on the thermal printing layer 32 as well as on the photochromic layer 33 and may cover the entire surface of the temperature display device 20E.

It is preferred that the protective layer 37 be a silicone coating layer, which is thermally and chemically stable. However, there is no particular limitation on the protective layer 37 as long as the protective layer 37 is a layer that is thermally and chemically stable. As the protective layer 37, there are given, for example, an aqueous emulsion coating layer made of polyvinyl alcohol or the like and a laminate layer formed of a transparent film made of polyethylene or the like.

As a method of forming the protective layer 37, for example, when a silicone coating layer is used as the protective layer 37, there may be given a method involving applying a solution for forming a silicone coating layer so as to cover the entire photochromic layer 33 and drying the silicone coating layer, to thereby form the protective layer 37. As another method, when a laminate layer is used as the protective layer 37, there may be given a method involving forming a laminate layer so as to cover the entire photochromic layer 33 and fixing the laminate layer to the photochromic layer 33 by pressure bonding, to thereby form the protective layer 37. The protective layer 37 can also be used in all the other modes.

Even when the protective layer 37 is not formed on the temperature display device 20, it is only required that the dimension of the temperature display device 20 and the layout of the temperature indicator 23, the time-information-to-be-printed portion 24, and the information printing portion 25 be stored in the printing apparatus in advance and a printing range be set so as to avoid the position of the temperature indicator 23 (that is, the photochromic layer 33). With this, the photochromic layer 33 is not directly heated at a time of printing, and a time and another information can be printed without affecting the temperature characteristics of the photochromic layer 33.

A temperature display device 20F of FIG. 9 includes a blocking layer 38 between the photochromic layer 33 and the thermal recording layer 32. The blocking layer 38 has an area larger than that of the photochromic layer 33. The blocking layer 38 is formed so as to prevent the photochromic layer 33 from being brought into direct contact with the thermal recording layer 32. Through formation of the blocking layer 38, a solvent, a binder, and the like for forming the photochromic layer 33 described later can be prevented from penetrating the thermal recording layer 32 to discolor the thermal recording layer 32. Further, through formation of the blocking layer 38, the effect of the thermal recording layer 32 on the coloring characteristics of the photochromic layer 33 can be suppressed.

Examples of the material of the blocking layer 38 include a vinyl chloride resin, a vinyl chloride-vinyl acetate copolymer, an acrylic resin, a polyurethane resin, polyester, an epoxy resin, nitrocellulose (soluble nitrocellulose), an ethyl cellulose resin, polyamide, a cyclized rubber, for example, isoprene rubber, chlorinated polyolefin, a maleic acid resin, a phenol resin, a ketone resin, a xylene resin, a petroleum resin, a melamine resin, an urea resin, and polyisocyanate. The material may be a photocurable resin, such as a UV curable resin. As the material for the blocking layer 38, an acrylic resin is preferred.

As a method of producing the blocking layer 38, the following method is given. First, a solution containing the above-mentioned material for the blocking layer 38 and a solvent is prepared. The blocking layer 38 is formed by printing the solution containing the material for the blocking layer 38 and the solvent on the thermal recording layer 32 and drying the solution before forming the photochromic layer 33. As a printing method, there is given the same printing method as that for forming the photochromic layer 33. The blocking layer can also be used in all the other modes.

Further, the temperature display device 20 may include the reference portion 22 having a plurality of chromas. FIG. 10 is a plan view of a temperature display device including the reference portion 22 having a plurality of chromas. A method using such a temperature display device is described below. In this case, description is given of a case in which it is assumed that an object to which the temperature display device 20 is bonded is stored at a temperature of 5°±3° (that is, 2°C or more and 8°C or less) for 180 minutes, but the present invention is not limited thereto.

It is assumed that the object to which the temperature display device 20 is bonded is stored at a temperature of 5°±3° for 180 minutes, and hence a chroma in the case where the temperature indicator 23 is stored at temperatures of 2°C, 5°C, and 8°C for 180 minutes is measured. Then, a heat fading table divided into five parts is created so that the chroma of the temperature indicator 23 at a time of being stored at a temperature of 2°C for 180 minutes is a maximum value, the chroma of the temperature indicator 23 at a time of being stored at a temperature of 8°C for 180 minutes is a minimum value, and the chroma of the temperature indicator 23 at a time of being stored at a temperature of 5°C for 180 minutes is an intermediate value, and the heat fading table is used as the reference portion 22.

FIG. 10 is a plan view of the temperature display device 20 including the reference portion 22 for use in any mode having a plurality of chromas created as described above. The temperature display device 20 is initialized through light irradiation to the temperature indicator 23 immediately before being used, and an initialization time is recorded on the time-information-to-be-printed portion 24. The initialized temperature display device 20, that is, the temperature history management label is immediately bonded to an object to be subjected to temperature management.

It can be easily determined whether or not the object has been stored within a management temperature range, that is, at a temperature of 5°±3°C by visually comparing the chroma of the temperature indicator 23 after an elapse of 180 minutes from the recorded time to the chroma of the reference portion 22.

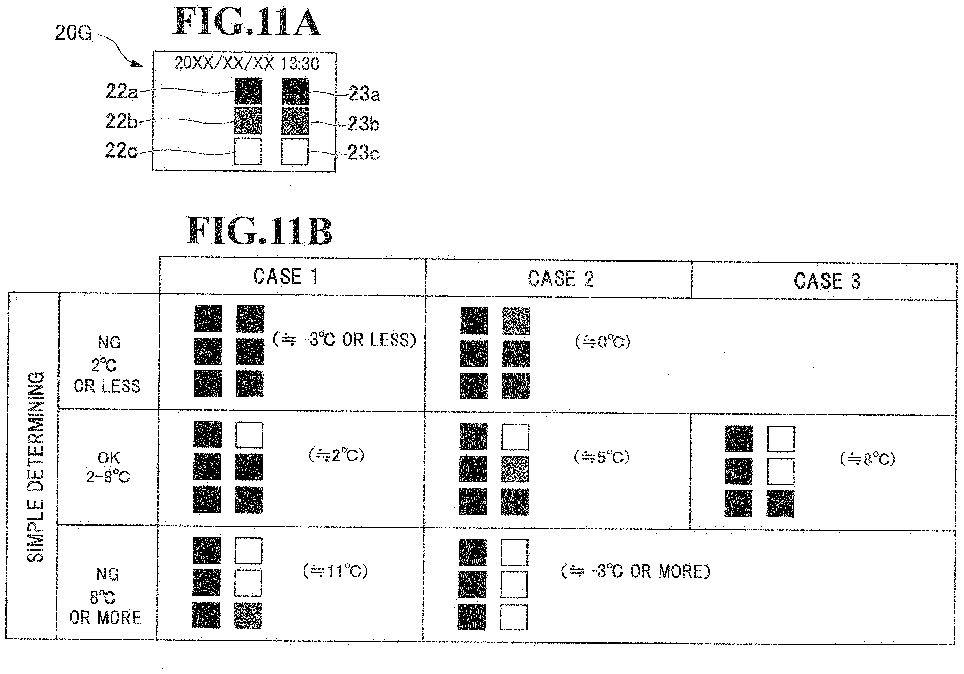

Further, the temperature display device 20 in any mode may include a plurality of reference portions and a plurality of temperature indicators. FIG. 11A is a plan view of a temperature display device 20G including reference portions 22a to 22c and temperature indicators 23a to 23c. The temperature indicators 23a to 23c are changed in chroma within different temperature ranges. The reference portions 22a to 22c represent chromas at a time of initialization of the temperature indicators 23a to 23c, respectively.

A method of performing temperature detection through use of the temperature display device 20G is described below. In this case, description is given of a case in which it is assumed that an object to which the temperature display device 20G is bonded is stored at a temperature of 5°C±3°C for 180 minutes, but the present invention is not limited thereto. Further, description is given of an example using the three different temperature indicators 23a to 23c, but the number of the temperature indicators in the temperature display device 20 of the present invention is not limited thereto.

In the temperature display device 20 according to this embodiment, for example, the temperature indicator 23a contains a photochromic compound that is hardly changed in chroma when 180 minutes elapse at a temperature of -3°C and reduced in chroma to about 0 when 180 minutes elapse at a temperature of 2°C. The temperature indicator 23b contains a photochromic compound that is hardly changed in chroma when 180 minutes elapse at a temperature 2°C and reduced in chroma to about 0 when 180 minutes elapse at a temperature of 8°C. The temperature indicator 23c contains a photochromic compound that is hardly changed in chroma when 180 minute elapse at a temperature of 8°C and reduced in chroma to about 0 when 180 minute elapse at a temperature of 14°C.

The reference portions 22a to 22c are created so as to represent chromas at a time of initialization of the temperature indicators 23a to 23c, respectively.

The temperature display device 20G is initialized through light irradiation to the temperature indicators 23a to 23c immediately before being used, and an initialization time is recorded on the time-information-to-be-printed portion 24. The initialized temperature display device 20G, that is, the temperature history management label is immediately bonded to an object to be subjected to temperature management.

FIG. 11B is a table for showing patterns of the temperature indicators 23a to 23c after an elapse of 180 minutes from initialization of the temperature history management label, and results obtained by determining whether temperature management is appropriate. Each arrangement of the reference portions 22a to 22c and the temperature indicators 23a to 23c shown in FIG. 11B are the same as those illustrated in FIG. 11A. It can be easily determined whether or not the object has been stored within the management temperature range, that is, at a temperature of 2°C or more and 8°C or less and further to which degree the storage temperature has been deviated from the management temperature range by visually comparing the reference portions 22a to 22c to the temperature indicators 23a to 23c.

For example, when the chromas of all the temperature indicators 23a to 23c are the same as those of the reference portions 22a to 22c, the storage temperature is estimated to be -3°C or less, and hence it can be determined that the storage temperature has been deviated from the management temperature range.

When the chromas of the temperature indicators 23b and 23c are the same as those of the reference portions 22b and 22c, and the chroma of the temperature indicator 23a is in the middle between the chroma of the reference portion 22a and a colorless state, the storage temperature is estimated to be about 0°C, and hence it can be determined that the storage temperature has been deviated from the management temperature range.

When the chromas of the temperature indicators 23b and 23c are the same as those of the reference portions 22b and 22c, and the chroma of the temperature indicator 23a is significantly reduced, the storage temperature is estimated to be about 2°C, and hence it can be determined that the storage temperature has been within the management temperature range.

When the chroma of the temperature indicator 23c is the same as that of the reference portion 22c, the chroma of the temperature indicator 23a is significantly reduced, and the chroma of the temperature indicator 23b is in the middle between the chroma of the reference portion 22b and a colorless state, the storage temperature is estimated to be about 5°C, and hence it can be determined that the storage temperature has been within the management temperature range.

When the chromas of the temperature indicators 23a and 23b are significantly reduced, and the chroma of the temperature indicator 23c is the same as that of the reference portion 22c, the storage temperature is estimated to be about 8°C, and hence it can be determined that the storage temperature has been within the management temperature range.

When the chromas of the temperature indicators 23a and 23b are significantly reduced and the chroma of the temperature indicator 23c is in the middle between the chroma of the reference portion 22c and a colorless state, the storage temperature is estimated to be about 11°C, and hence it can be determined that the storage temperature has been deviated from the management temperature range.

When the chromas of all the temperature indicators 23a to 23c are significantly reduced, the storage temperature is estimated to be 14°C or more, and hence it can be determined that the storage temperature has been deviated from the management temperature range.

As described above, with the temperature display device 20G according to one mode of the present invention, it can be easily determined visually to which degree the object having the temperature display device 20G bonded thereto has been deviated from the management temperature range. The temperature display device 20G including the plurality of reference portions 22a to 22c and the plurality of temperature indicators 23a to 23c is useful when it is required to grasp to which degree the storage temperature has been deviated from a temperature range in which the object is required to be stored.

As another method of using the temperature display device 20, there is given a temperature detection method using a read processing device. The temperature display device 20 in this mode is not required to be provided with the reference portion 22.

As the read processing device, there are given, for example, a smartphone, a tablet terminal, and a dedicated device having an image pickup function. The read processing device is configured to read information on the temperature history management label (image including the temperature indicator 23 and the time-information-to-be-printed portion 24) through an image pickup unit and determine a temperature to which the object having the temperature history management label (temperature display device 20) bonded thereto has been exposed, an elapsed time, and the like, based on the read information. The read processing device is configured to cause a display unit to display the determined temperature to which the object has been exposed, the determined elapsed time from initialization of the temperature history management label, and the like.

As described above, when temperature detection is performed by reading the information on the temperature history management label through use of the read processing device, the temperature management of the object having the temperature history management label bonded thereto can be performed simply and more accurately at any elapsed time from initialization of the temperature history management label.

The foregoing description has been given by way of example only and it will be appreciated by a person skilled in the art that modifications can be made without departing from the scope of the present invention as defined by the claims.

## Claims

1. A temperature display device (20), comprising:
a base material (31);
a time-information-to-be-printed portion (24) formed on the base material (31); and
a temperature indicator (23) formed on the base material (31),
the temperature indicator (23) including a photochromic layer (33).

2. A temperature display device (20) according to claim 1, wherein the time-information-to-be-printed portion (24) includes a thermal recording layer (32).

3. A temperature display device (20) according to claim 2, wherein the photochromic layer (33) is positioned on the thermal recording layer (32).

4. A temperature display device (20) according to claim 3, wherein the photochromic layer (33) is positioned on the thermal recording layer (32) and partially penetrates a part of the thermal recording layer (32).

5. A temperature display device (20) according to claim 3, further comprising a blocking layer (38) formed between the thermal recording layer (32) and the photochromic layer (33).

6. A temperature display device (20) according to any one of claims 2 to 5, wherein the photochromic layer (33) has an area smaller than an area of the thermal recording layer (32).

7. A temperature display device (20) according to any one of the preceding claims, further comprising a protective layer (37) formed on the photochromic layer (33).

8. A temperature display device (20) according to claim 7, wherein the protective layer (37) has an area larger than an area of the photochromic layer (33).

9. A temperature display device (20) according to any one of the preceding claims, further comprising a pressure-sensitive adhesive layer (35) on a surface of the base material (31) opposite to a surface on which the temperature indicator (23) is formed.

10. A temperature history management label (40), comprising:
the temperature indicator (23) of the temperature display device (20) of any one of the preceding claims, which is initialized by being irradiated with light; and
the time-information-to-be-printed portion (24), on which an initialization time at which the temperature indicator (23) is initialized is printed.

11. A temperature history management label (40) according to claim 10, wherein a part of the time-information-to-be-printed portion (24) in which the initialization time is printed is separated from the temperature indicator (23) by at least 1 mm.

12. A temperature history management label (40) according to claim 10, wherein the temperature history management label (40) has information different from the initialization time printed thereon.

13. A temperature history management label (40) according to claim 10, wherein the time-information-to-be-printed portion (24) has the initialization time printed thereon by a thermal printer.
